# EUROPÄISCHE PATENTSCHRIFT

(11) **EP 1 627 678 B1**
(45) Veröffentlichungstag und Bekanntmachung des Hinweises auf die Patenterteilung: **10.12.2008**
(21) Anmeldenummer: 05013935.1
(22) Anmeldetag: 28.06.2005
(51) Int. Cl.: B01J 8/06

(54) **Verfahren und Rohrbündelreaktor zur Durchführung endothermer oder exothermer Gasphasenreaktionen**
Process and tubular reactor for carrying out endothermal or exothermal reactions
Procédé et réacteur tubulaire pour effectuer des réactions endothermiques ou exothermiques

(30) Priorität: 20.08.2004 DE 102004040472
(43) Veröffentlichungstag der Anmeldung: 22.02.2006
(73) Patentinhaber: MAN DWE GmbH, 94469 Deggendorf (DE)
(72) Erfinder: Lehr, Manfred, 94469 Deggendorf (DE); Egner, Franz, 94269 Rinchnach (DE); Claussen, Michael, Prof. Dr.-Ing., 38678 Clausthal-Zellerfeld (DE); Maly, Markus, Dipl.-Chem., 38678 Clausthal-Zellerfeld (DE)
(74) Vertreter: Paustian, Othmar

(56) Entgegenhaltungen:
- EP-A- 1 245 532
- EP-A- 1 473 272
- WO-A-01/85330
- WO-A-01/85333
- US-A- 3 268 299

## Beschreibung

Die Erfindung bezieht sich auf ein Verfahren zur Durchführung endothermer oder exothermer Gasphasenreaktionen.

Die Erfindung bezieht sich auch auf einen Rohrbündelreaktor zur Durchführung endothermer oder exothermer Gasphasenreaktionen, nach dem Oberbegriff von Anspruch 6.

Aus US-3,268,299 ist ein Rohrbündelreaktor bekannt, bei dem in den Reaktionsrohren jeweils ein Dosierrohr zentrisch angeordnet ist, das sich vom gaseintrittsseitigen Ende des Reaktionsrohrs aus in die Katalysatorfüllung hinein maximal bis zu deren Ende erstreckt. Über die gesamte Länge der Dosierrohre sind in gleichmäßigen oder ungleichmäßigen Abständen Gasaustrittsöffnungen in der Rohrwand verteilt, durch die hindurch das Reaktionsgas in die Katalysatorfüllung austritt. Es werden verschiedene geometrische Formen für diese Gasaustrittsöffnungen vorgeschlagen, die auch zu einem durchgehenden Schlitz ineinander übergehen können. In einer Ausführungsform sind die gaseintrittsseitigen Enden der Reaktionsrohre radial außerhalb der Dosierrohre abgedichtet, so daß der gesamte jeweils in ein Reaktionsrohr eintretende Reaktionsgasstrom zunächst in das Dosierrohr geführt wird. Mit dieser Ausführungsform wird den Reaktionsrohren ein Reaktionsgasgemisch zugeführt. Bei einer zweiten Ausführungsform kann ein Reaktionsgas auch neben dem Dosierrohr in das Reaktionsrohr eintreten. Mit dieser Ausführungsform werden zwei Reaktanten getrennt dem Reaktionsrohr zugeführt, wobei der erste Reaktant durch das Dosierrohr und der zweite Reaktant neben dem Dosierrohr direkt der Katalysatorfüllung zugeführt wird.

Bei diesen vorbekannten Dosierrohren wird angestrebt, daß der Druckverlust der Gasaustrittsöffnungen groß ist gegenüber dem Druckverlust in Längsrichtung des Dosierrohres. Das bedeutet, daß der Reibungsdruckverlust des Dosierrohres relativ klein bzw. der im Dosierrohr vorhandene Druck annähernd konstant sein soll. Dadurch soll sich eine gleichmäßige Abströmung entlang der Gasaustrittsöffnungen des Dosierrohres einstellen, um in der Hauptsache die Bildung sogenannter Hot Spots in der Katalysatorfüllung zu vermeiden oder zu minimieren. Darüber hinaus soll die Katalysatorlebensdauer verlängert, der Durchsatz erhöht und die Betriebssicherheit sowie die Produktionsraten verbessert werden.

Aus WO 01/85330 A2 und WO 01/85333 A2 ist es ebenfalls bekannt, Dosierrohre in Reaktionsrohren anzuordnen. In diesen vorbekannten Dosierrohren sind längs deren Längserstreckung an vorgegebenen Stellen Drosseln angeordnet, die als Längsbohrungen im Inneren des Dosierrohrs und als Gasaustrittsöffnungen in der Wand des Dosierrohrs ausgebildet sind. Über das Dosierrohr wird ein erster Reaktant in die Katalysatorfüllung eingeleitet, während ein zweiter Reaktant neben dem Dosierrohr direkt in die Katalysatorfüllung eingeleitet wird. Auf diese Weise soll eine ansonsten beim Zusammenführen der beiden Reaktanten entstehende Explosionsgefahr vermieden werden. Durch die abgestufte Zudosierung des ersten Reaktanten bleiben die Konzentrationen der Reaktanten in dem Reaktionsgasgemisch unterhalb der Explosionsgrenze. Die Einleitung eines fertigen Reaktionsgasgemisches in das Dosierrohr und/oder das Reaktionsrohr ist bei dem aus WO 01/85330 A2 und WO 01/85333 A2 vorbekannten Rohrbündelreaktor nicht vorgesehen.

Aus EP 1245532 A2 sind ein Reformierverfahren und eine Reformiervorrichtung bekannt, bei denen mehrere Reformierräume bzw.-einheiten in Reihe hintereinander geschaltet sind, wobei zwischen zwei aufeinander folgenden Reformierräumen jeweils ein Freiraum vorhanden ist. Das zu reformierende Gasgemisch wird in Teilströme aufgeteilt. Der erste Teilstrom fließt direkt in die Stirnendfläche des in Strömungsrichtung ersten Reformierraums. Die weiteren Teilströme werden den Stirnendflächen der stromabwärts gelegenen Reformierräume jeweils über die Freiräume zugeführt. Der jeweilige Reformierraum wird von dem zugeordneten Teilstrom auf ganzer Länge durchströmt. In jedem Reformierraum ist auf der Eintrittsseite ein erster Katalysator angeordnet, der die partielle Oxidation des Brennstoffes katalysiert, um eine schnelle Erwärmung zu erzielen. In Strömungsrichtung hinter dem ersten Katalysator ist ein zweiter Katalysator angeordnet, der die Reformierreaktion katalysiert. Durch diese Hintereinanderschaltung mehrerer Reformierräume und der Anordnung eines ersten Katalysators in jedem Reformierraum für eine partielle Oxidation kann zum Starten eines Elektromotors der zweite reformierende Katalysator schnell und gleichmäßig erwärmt werden. Auf diese Weise kann zum Starten sofort hochreines Wasserstoffgas produziert werden, wobei die Vorrichtung kompakt gehalten ist.

Ein wesentliches Problem bei allen Gasphasenreaktionen ist, daß neben dem gewünschten Produkt - im folgenden nur als "Produkt" bezeichnet - auch Nebenprodukte entstehen, die sich bei einer nicht optimalen Reaktionsführung u. a. durch unerwünschte Folgereaktionen bilden. Der Anteil an Nebenprodukten bei Verfahren und Rohrbündelreaktoren, bei denen den Reaktionsrohren zur Durchführung endothermer oder exothermer Gasphasenreaktionen ein (fertiges) Reaktionsgasgemisch zugeführt wird, ist - unabhängig davon, ob die Reaktionsrohre Zudosiereinrichtungen enthalten oder nicht - relativ hoch.

Der Erfindung liegt die Aufgabe zugrunde, bei einem Verfahren und einem Rohrbündelreaktor, bei denen den Reaktionsrohren zur Durchführung endothermer oder exothermer Gasphasenreaktionen ein Reaktionsgasgemisch zugeführt wird, die Strömungsgeschwindigkeitsverteilung des Reaktionsgasgemisches über die gesamte Katalysatorschüttung zu optimieren, um die Bildung unerwünschter Nebenprodukte zu minimieren.

Erfindungsgemäß wird diese Aufgabe mit einem Verfahren gemäß Anspruch 1 und einem Rohrbündelreaktor gemäß Anspruch 6 gelöst.

Vorteilhafte Ausgestaltungen sind in den jeweiligen Unteransprüchen angegeben.

Der Erfindung liegt die Erkenntnis zugrunde, daß das Verweilzeitverhalten des Reaktionsgasgemisches entlang der Katalysatorfüllung, die im folgenden auch als Katalysatorschüttung bezeichnet wird, wesentlich für die Reaktionsführung ist. Insbesondere bei Reaktionen, die mit einer deutlichen Zunahme der Fluiddichte - bedingt durch eine Abnahme der Molzahl und/oder durch einen teilweisen Phasenwechel von gasförmig zu flüssig - verbunden sind, verringert sich die Strömungsgeschwindigkeit mit zunehmender Tiefe der Katalysatorschüttung. Ein Beispiel hierfür ist die Synthese von Kraftstoffen aus Synthesegas, bekannt als Fischer-Tropsch-Synthese. Infolge der Verringerung der Strömungsgeschwindigkeit erhöht sich entsprechend die Verweilzeit des Reaktionsgasgemisches in der aktiven Katalysatorschüttung mit zunehmender Tiefe. Eine lange Verweilzeit bedeutet, daß den Gaskomponenten ein langer Zeitraum für Reaktionen zur Verfügung steht. Da jedoch in diesen relativ tiefen Bereichen in der aktiven Katalysatorschüttung bereits ein hoher Anteil an gebildetem Produkt im Reaktionsgasgemisch enthalten ist, werden durch lange Verweilzeiten nicht nur die gewünschten Reaktionen, sondern auch weiterführende Reaktionen von bereits gebildetem Produkt zu unerwünschten Nebenprodukten begünstigt, so z. B. bei der Fischer-Tropsch-Synthese die Bildung von unerwünscht langkettigen Molekülen.

Durch die erfindungsgemäßen Maßnahmen ist eine definierte Einflußnahme auf das Verweilzeitverhalten des Reaktionsgasgemisches entlang der Katalysatorschüttung und damit eine Verbesserung der Reaktionsführung möglich. Mit der erfindungsgemäßen gezielten Zudosierung festgelegter Teilstrom-Sollmengen von nicht oder nur wenig umgesetztem Reaktionsgasgemisch an Stellen in der Katalysatorschüttung, an denen die Strömungsgeschwindigkeit zu gering, d. h. die Verweilzeit für einen günstigen Reaktionsverlauf zu lang wäre, kann dort die Strömungsgeschwindigkeit erhöht und damit die Verweilzeit verringert und dadurch die Bildung unerwünschter Nebenprodukte erschwert werden. Dabei wird vermieden, daß Verbesserungen der Reaktionsführung an den einen Stellen zu Verschlechterungen an anderen Stellen führen, indem eine optimale Geschwindigkeitsverteilung über die gesamte Katalysatorschüttung eingestellt wird. So ist gewährleistet, daß das Verweilzeitverhalten des Reaktionsgasgemisches in der Katalysatorschüttung insgesamt verbessert ist. Dafür ist es wesentlich, nicht nur die Sollmengen und Zudosierstellen der einzelnen Teilströme zu definieren, sondern auch die Zudosiereinrichtungen entsprechend so auszulegen, daß sich diese Sollmengenströme auch tatsächlich einstellen. Dieses wird erfindungsgemäß dadurch erreicht, daß die jeweils anliegende Druckdifferenz zwischen Ein- und Austritt der Zudosiereinrichtung für die einzelnen Teilströme ermittelt wird und der Strömungswiderstand der Zudosiereinrichtung für jede Stelle der Zudosierung so angepaßt wird, daß er dieser jeweiligen Druckdifferenz entspricht. Auf diese Weise wird der Anteil an Nebenprodukten deutlich verringert und damit die Produktreinheit deutlich verbessert. Gleichzeitig wird eine gleichmäßigere Belastung der Katalysatorschüttung erreicht, was z. B. die Katalysatorlebensdauer und die Raum/Zeit-Ausbeute erhöht.

Darüber hinaus kann durch die erfindungsgemäßen Maßnahmen der Gesamtdruckverlust des Reaktors gegenüber einem von der Rohrgeometrie her gleichen konventionellen Reaktor, der die erfindungsgemäße Zudosierung nicht aufweist, gezielt verringert werden. Durch die erfindungsgemäße Bildung von Teilstrom-Sollmengen, die erst an in Strömungsrichtung tiefergelegenen Stellen zugeführt werden, kann die Strömungsgeschwindigkeit vor den Dosierstellen um ein jeweils vorgegebenes Maß reduziert werden. Da die Strömungsgeschwindigkeit quadratisch in den Druckverlust eingeht, kann durch eine geeignete Reduzierung der Strömungsgeschwindigkeit im Anfangsbereich der Katalysatorschüttung die gewünschte Zunahme der Geschwindigkeit im Endbereich in bezug auf den Druckverlust überkompensiert werden, d. h. die Abnahme des Druckverlustes im Anfangsbereich ist dann größer als die Zunahme des Druckverlustes im Endbereich, und dies bei Ausnutzung der gesamten Katalysatorfüllung. Eine Abnahme des Gesamtdruckverlusts über den Reaktor ist die Folge, was wiederum den technischen Aufwand und die Betriebskosten senkt.

Soll andererseits ein Reaktor ausgelegt werden, der einen vorgegebenen Druckverlust nicht überschreiten soll, so kann mit den erfindungsgemäßen Maßnahmen bei gleichem Katalysatorvolumen ein Rohrbündel mit weniger und dafür längeren Rohren gegenüber einem konventionellen Reaktor verwendet werden. Daraus ergibt sich eine leichtere und kostengünstigere Bauweise des Reaktors.

Bei späteren Änderungen in der Betriebsweise des Reaktors, z. B. Austausch des Katalysators für höhere Leistungen oder für anderes Pro- oder Edukt, können die Prozeßbedingungen in einfacher Weise durch modifizierte Zudosiereinrichtungen neu angepaßt werden, ohne Änderungen am Reaktor selbst vornehmen zu müssen. Solche Änderungen sind in der Regel mit einem großen Aufwand verbunden.

Bei dem aus der US-3,268,299 bekannten Reaktionsrohrbündel stellt sich eine planmäßige, insbesondere eine gleichmäßige Zudosierung von Teilstrommengen nicht ein. In der Realität ergeben sich zufällige Zudosiermengen. Denn eine gleichmäßige Abströmung entlang der Gasaustrittsöffnungen des Dosierrohrs kann sich nur einstellen, wenn die Gasaustrittsöffnungen in einen Raum münden, der einen annähernd konstanten Druck entlang des Dosierrohrs aufweisen würde. Das ist bei einem katalysatorgefülltem durchströmten Reaktionsrohr jedoch nicht der Fall, da sich bedingt durch den Druckverlust der Katalysatorfüllung ein Druckgradient längs des Reaktionsrohrs einstellt.

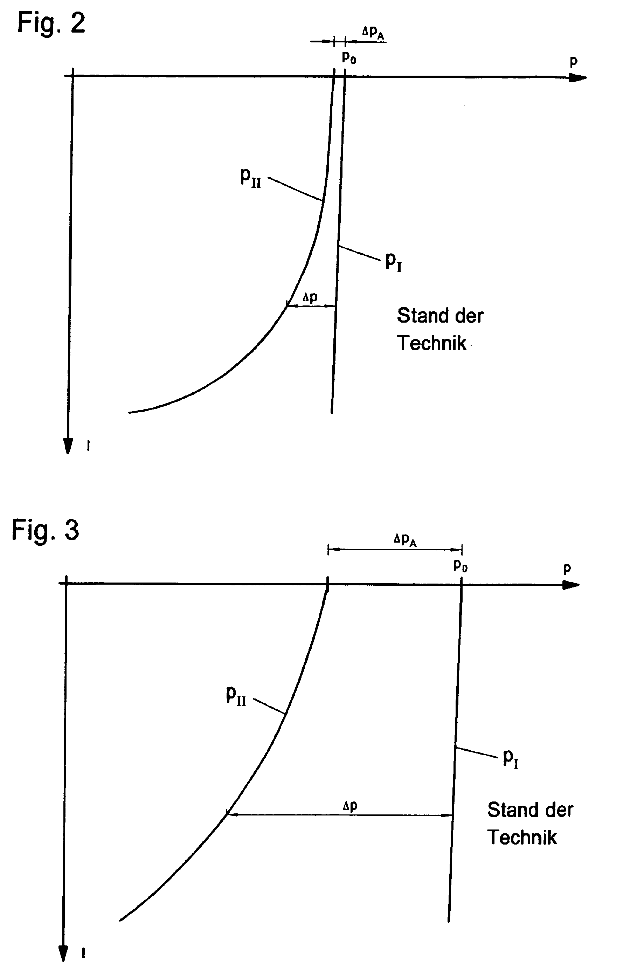

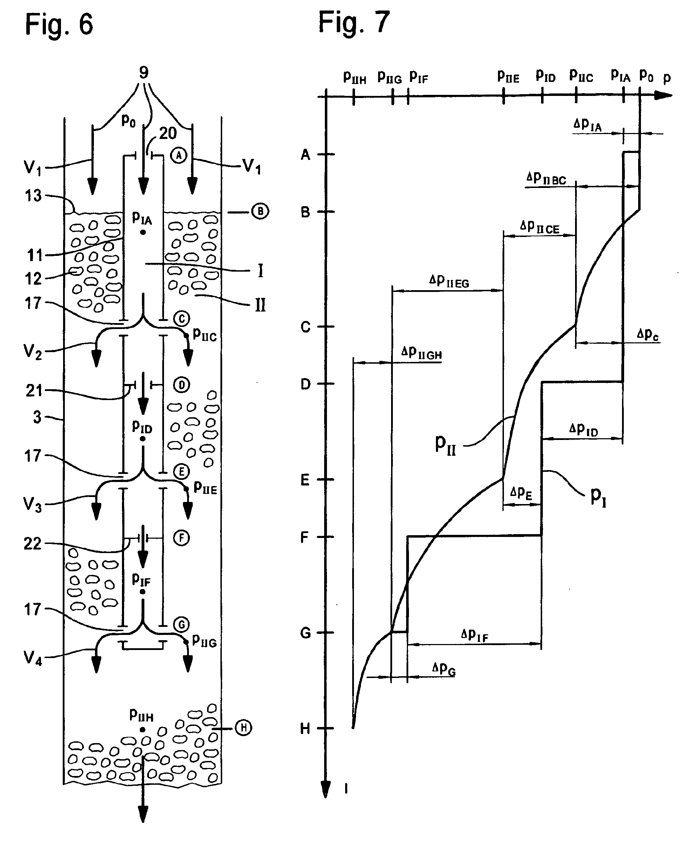

Figur 2 zeigt qualitativ die sich tatsächlich einstellenden Druckverläufe in den aus US-3,268,299 bekannten Dosierrohren und Reaktionsrohren im Falle großer Gasaustrittsöffnungen, wie sie dort in Figur 6 oder 7 dargestellt sind. Die Kurve pₗ stellt den (leicht abfallenden) Druckverlauf im Dosierrohr und Kurve p_{II} den Druckverlauf in der Katalysatorschüttung dar. Da ein Fluidstrom sich stets den Weg des geringsten Widerstands sucht, und der Strömungswiderstand der Katalysatorschüttung deutlich höher ist als der des Dosierrohrs, strömt im Anfangsbereich der Katalysatorschüttung nur sehr wenig Reaktionsgasgemisch aus dem Dosierrohr in die Katalysatorschüttung. Dementsprechend ist dort auch der Druckabfall an den Gasaustrittsöffnungen und somit die sich einstellende Druckdifferenz Δp_{A}, Δp zwischen Dosierrohr und Katalysatorschüttung sehr gering. Wegen der geringen in der Katalysatorschüttung strömenden Gasmenge ist auch der Druckabfall in der Katalysatorschüttung klein, was bewirkt, daß die Druckdifferenz Δp an den Gasaustrittsöffnungen und somit die durchströmende Gasmenge zunächst nur sehr langsam mit der Tiefe bzw. Länge I der Katalysatorschüttung ansteigt. Der Druckabfall in der Katalysatorschüttung vergrößert sich somit auch nur langsam.

Erst im letzten Teil des Dosierrohrs strömt der überwiegende Teil des Reaktionsgasgemisches in die Katalysatorschüttung, da von hier aus der Weg durch die verbleibende Tiefe der Katalysatorschüttung am kürzesten und daher der Strömungswiderstand am geringsten ist. Der im Endbereich der Katalysatorschüttung stark ansteigende Mengenstrom erzeugt nun einen deutlichen Druckabfall in der Katalysatorschüttung und erhöht die Druckdifferenz an den letzten Gasaustrittsöffnungen des Dosierrohrs. Dadurch wird die Tendenz zu einem großen Gasdurchsatz durch die letzten Gasaustrittsöffnungen des Dosierrohrs noch verstärkt.

Die in US-3,268,299 beschriebene Dosiereinrichtung mit großen Öffnungsquerschnitten ist somit für eine gleichmäßige Verteilung des Reaktionsgasgemisches über die Dosierrohrlänge nicht geeignet. Vielmehr wird der größte Teil - der Anfangs- und der Mittelbereich - der mit der Dosiereinrichtung ausgestatteten Katalysatorschüttung kaum vom Reaktionsgasgemisch durchströmt, d. h. der Anfangs- und der Mittelbereich der Katalysatorschüttung wird für die Reaktion praktisch nicht genutzt, während der größte Teil des Reaktionsgasgemisches direkt in den hinteren bzw. Endbereich der Katalysatorschüttung geführt wird, der damit überbeansprucht wird.

Werden die Gasaustrittsöffnungen kleiner ausgeführt, wie in Figur 2 von US-3,268,299 dargestellt, erhöht sich deren Strömungswiderstand. Bedingt durch den hohen Druckverlust der Gasaustrittsöffnungen wird nun auch ein Abströmen an den vorderen, im Gaseintrittsbereich des Dosierrohrs liegenden Gasaustrittsöffnungen erzwungen, wie in Figur 3 qualitativ dargestellt. Dies führt zu einer Verbesserung in der Gleichmäßigkeit der Abströmung, jedoch ist die Abströmung am Ende des Dosierrohrs immer noch beträchtlich größer als am Anfangsbereich. Darüber hinaus ist hierbei aufgrund des deutlich gestiegenen Gesamtdruckverlustes ein höherer Eingangsdruck po erforderlich, was den technischen Aufwand und die Kosten erhöht.

Die Erfindung wird nachfolgend anhand der Zeichnungen beispielshalber noch näher erläutert. Es zeigen:
- Figur 1: einen Längsschnitt durch einen erfindungsgemäßen Rohrbündelreaktor;
- Figur 2: ein Schaubild, das für einen Rohrbündelreaktor aus dem Stand der Technik die Druckdifferenz Ap zwischen dem Dosierrohr und der Katalysatorfüllung darstellt;
- Figur 3: ein der Figur 2 ähnliches Schaubild mit einem höheren Eingangsdruck po, für einen Rohrbündelreaktor aus dem Stand der Technik;
- Figur 4: ein der Figur 2 ähnliches Schaubild für den erfindungsgemäßen Rohrbündelreaktor aus Figur 1, wobei die Druckdifferenz Δp zwischen dem Eingangsdruck p₀ und der Katalysatorfüllung dargestellt ist;
- Figur 5a, b, c: jeweils einen Längsschnitt durch ein Reaktionsrohr mit einer darin angeordneten Zudosiereinrichtung, gemäß einer zweiten, dritten bzw. vierten Ausführungsform der Erfindung;
- Figur 5d: eine Draufsicht auf das Reaktionsrohr aus Figur 5a längs Pfeilen Vd;
- Figur 6: einen abgebrochenen Längsschnitt durch ein Reaktionsrohr mit einer darin angeordneten Zudosiereinrichtung, gemäß einer fünften Ausführungsform der Erfindung;
- Figur 7: ein Schaubild ähnlich Figur 4, für das Reaktionsrohr aus Figur 6;
- Figur 8a: Teillängsschnitte durch die Zudosiereinrichtung aus Figur 6, in konstruktiv ausgebildeter Darstellung;
- Figur 8b: einen Querschnitt durch die Zudosiereinrichtung aus Figur 8a längs Linie VIIIb-VIIIb;
- Figur 9: einen Längsschnitt durch ein Reaktionsrohr mit einer darin angeordneten Zudosiereinrichtung, gemäß einer sechsten Ausführungsform der Erfindung;
- Figur 10a: einen Längsschnitt durch ein Reaktionsrohr mit einer darin angeordneten Zudosiereinrichtung, gemäß einer siebten Ausführungsform der Erfindung;
- Figur 10b: eine Draufsicht auf das Reaktionsrohr aus Figur 10a längs Linie Xb-Xb;
- Figur 10c: das Detail Xc aus Figur 10a in vergrößerter Darstellung und
- Figur 10d: eine Untersicht des Details Xc in Figur 10c, längs Pfeil Xd.

Die in den Figuren dargestellten Ausführungsbeispiele eines erfindungsgemäßen Rohrbündelreaktors 1 weisen ein Rohrbündel 2 mit einer Vielzahl katalysatorgefüllter Reaktionsrohre 3 auf, die sich zwischen einem oberen Rohrboden 4 und einem unteren Rohrboden 5 vertikal erstrecken und von einem zylindrischen Mantel 6 umschlossen sind. An den beiden Enden der Reaktionsrohre 3 sind deren Außenseiten mit dem jeweiligen Rohrboden 4, 5 gasdicht verschweißt. Der obere Rohrboden 4 wird von einer Gaseintrittshaube 7 und der untere Rohrboden 5 von einer Gasaustrittshaube 8 überspannt.

Über die Gaseintrittshaube 7 wird ein Reaktionsgasgemisch 9 in das Rohrbündel 2 eingeleitet. Nach Durchströmung des Rohrbündels 2 wird das umgesetzte Reaktionsgasgemisch 9a mittels der Gasaustrittshaube 8 aus dem Rohrbündelreaktor 1 abgeleitet.

Die Reaktionsrohre 3 werden von einem Wärmeträger umspült, der durch Stutzen 10 in das Reaktionsrohrbündel 2 eingeleitet und aus diesem abgeleitet wird und auf unterschiedlichen Strömungswegen durch das Reaktionsrohrbündel 2 geführt werden kann. Die Strömungsführung des Wärmeträgers kann auf jede geeignete Weise erfolgen und ist in keiner Weise eingeschränkt.

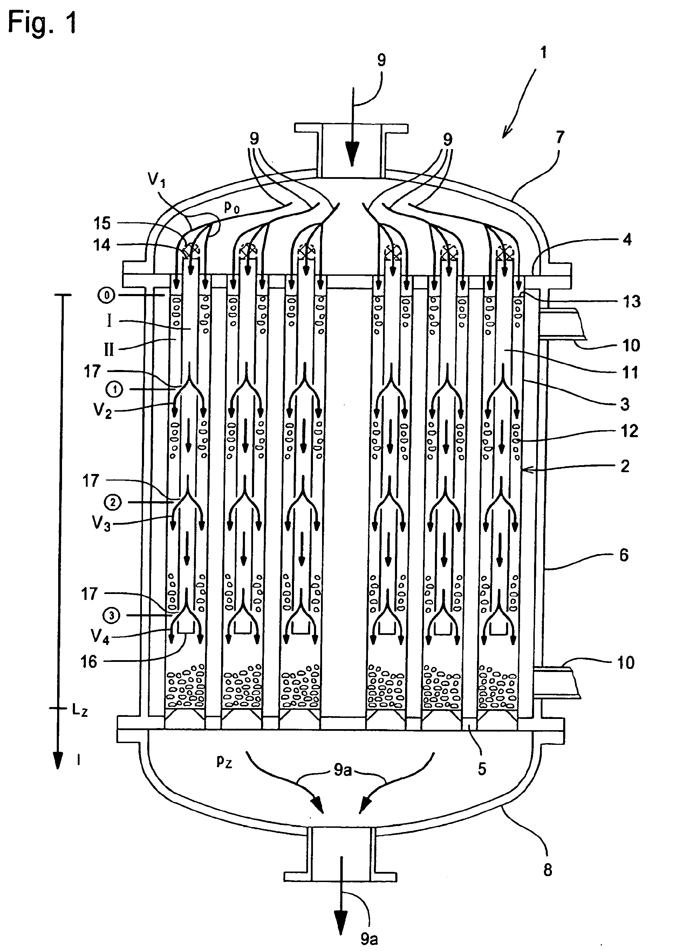

Bei dem in Figur 1 gezeigten Rohrbündelreaktor 1 sind aus Gründen der Übersichtlichkeit lediglich sechs Reaktionsrohre 3 in vergrößertem Maßstab dargestellt. Tatsächlich ist die Anzahl der Reaktionsrohre 3 in einem solchen Längsschnitt um ein Vielfaches größer.

In jedem Reaktionsrohr 3 ist ein Dosierrohr 11 zentrisch angeordnet. Der Zwischenraum zwischen der Außenwandung des Dosierrohrs 11 und der Innenwandung des Reaktionsrohrs 3 ist mit Katalysatorpartikeln 12 gefüllt. Der Innenraum des Dosierrohrs 11 ist frei von Katalysatorpartikeln 12. Am gaseintrittsseitigen Ende der Reaktionsrohre 3 ist der Zwischenraum zwischen Dosierrohr 11 und Reaktionsrohr 3 offen, so daß Reaktionsgasgemisch 9 dort in die Anfangsfläche 13 der Katalysatorfüllung 12 eintreten kann.

Das Dosierrohr 11 weist ein offenes Ende 14 auf, das aus dem Reaktionsrohr 3 vorragt und auf dem ein Partikelfilter 15 angeordnet ist, der das Eindringen von festen Teilchen in das Dosierrohr 11 und dadurch eventuell auftretende Verstopfungen verhindert. Das andere Ende 16 des Dosierrohrs 11 ist geschlossen und erstreckt sich bis zu einem vorgegebenen Abstand vom Ende der Katalysatorschüttung 12 in diese hinein.

Die in Figur 1 dargestellten Dosierrohre 11 weisen jeweils an drei Stellen (Stellen 1, 2, 3) längs ihrer Länge Gasaustrittsöffnungen 17 in ihrer Umfangswand auf, durch die hindurch Reaktionsgasgemisch in die Katalysatorfüllung 12 austritt.

Das in die Gaseintrittshaube 7 eintretende Reaktionsgasgemisch 9 weist dort einen Anfangsdruck po auf, mit dem es sowohl in die Dosierrohre 11 als auch neben den Dosierrohren 11 unmittelbar in die freie Stirnfläche bzw. die Anfangsfläche 13 der Katalysatorfüllung 12 eintritt.

Das bedeutet also, daß der ein Reaktionsrohr 3 durchströmende Reaktionsgasgemischstrom 9 in einen ersten Teilstrom V₁, der neben dem Dosierrohr 11 in das Reaktionsrohr 3 und dort in die Anfangsfläche 13 der Katalysatorfüllung 12 eintritt, und in einen (zunächst) zweiten Teilstrom geteilt wird, der durch den Partikelfilter 15 in das Dosierrohr 11 eintritt.

Der erste Teilstrom V₁ durchströmt die Katalysatorfüllung 12 auf deren gesamten Länge Lz. Der durch das Dosierrohr 11 strömende zweite Teilstrom wird seinerseits in drei Teilströme V₂, V₃ und V₄ aufgeteilt, die längs der Dosierrohrlänge verteilt an den jeweiligen Stellen der Zudosierung (Stellen 1, 2, 3) bzw. durch die Gasaustrittsöffnungen 17 in die Katalysatorfüllung 12 austreten.

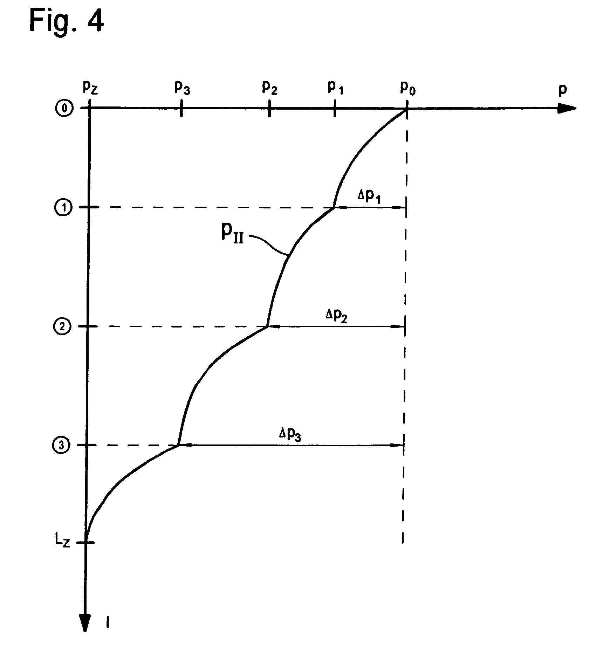

In Figur 4 ist der Druckverlauf p_{II} in der Katalysatorfüllung 12 dargestellt. Nach den Stellen der Zudosierung bzw. der Teilung in Teilströme (Stellen 0, 1, 2, 3) stellt sich jeweils ein stetig abnehmender Druckverlauf p_{II} ein. Der Druckverlust ist direkt nach einer Zudosierstelle jeweils relativ stark, d. h. die Druckverlaufskurve p_{II} fällt relativ stark ab, und wird dann immer flacher. Der Grund hierfür liegt darin, daß das Reaktionsgasgemisch 9 unter Einwirkung des Katalysators 12 reagiert, wobei ein Volumendefekt auftritt in Folge der Umsetzung teilweise in Flüssigkeit und/oder in Folge einer reaktionsbedingten Verminderung der Molzahl. Dadurch nimmt die Strömungsgeschwindigkeit und damit auch der Druckverlust ab.

Um ein gewünschtes Verweilzeitverhalten zu erzielen, werden die Stellen der Zudosierung (Stellen 0, 1, 2, 3) und die Sollmengen der Teilströme (V₁, V₂, V₃, V₄) festgelegt. Daraus wird die Druckverlaufskurve p_{II} der Katalysatorfüllung 12 iterativ ermittelt.

Dadurch, daß die Zudosierstellen (Stellen 1, 2, 3) in die Bereiche mit verringerter Strömungsgeschwindigkeit gelegt und dort geeignet festgelegte Teilstrommengen V₂, V₃, V₄ in die Katalysatorfüllung 12 eingeleitet werden, kann in solchen Bereichen die Strömungsgeschwindigkeit wieder gesteigert, d. h. der Druckverlust wieder erhöht, und dadurch die Verweilzeit des Reaktionsgasgemisches 9 verkürzt werden. An den Zudosierstellen (Stellen 1, 2, 3) herrschen in der Katalysatorfüllung die Drücke p₁, p₂, p₃.

Dabei wird die gewünschte Teilstrom-Sollmenge durch ein erfindungsgemäßes Einstellen der Strömungswiderstände der Gasaustrittsöffnungen 17 zugeführt. Die Reibungs- und Abzweigdruckverluste seien hierbei vernachlässigbar klein, so daß der Druck längs des Dosierrohrs 11 als konstant angesehen werden kann. Der Strömungswiderstand des Partikelfilters sei für dieses Ausführungsbeispiel ebenfalls vernachlässigbar klein. Der gesamte für die jeweilige Zudosierstelle erforderliche Strömungswiderstand muß dann von dort vorhandenen Gasaustrittsöffnungen 17 aufgebaut werden, d. h. diese sind als horizontal wirkende Drosseln ausgebildet. Deren Strömungswiderstand wird mittels Durchströmungsquerschnitt und Widerstandsbeiwert in diesem Ausführungsbeispiel erfindungsgemäß so eingestellt, daß er bei der für die jeweilige Drossel vorgegebenen Teilstrom-Sollmenge der Druckdifferenz entspricht, die zwischen dem Anfangsdruck p₀ in der Gaseintrittshaube 7 und dem Druck in der Katalysatorfüllung 12 and der Stelle der Drossel vorhanden ist. Diese Druckdifferenzen sind in Figur 4 als Δp₁, Δp₂ und Δp₃ dargestellt.

Der Anfangsdruck po liegt am gaseintrittsseitigen Ende des Dosierrohrs 11 an, wo der Reaktionsgasgemischstrom 9 zum ersten Mal geteilt wird, und auch im gesamten Dosierrohr 11. Der Druck in der Katalysatorfüllung 12 hängt ab vom spezifischen Druckverlust durch die Katalysatorfüllung 12, welcher durch Berechnung und/oder Experimente bekannt ist.

Die Sollmenge des Teilstroms V₁ wird durch das Einstellen der restlichen Teilströme eingestellt.

Am Ende L_{Z} der Katalysatorfüllung 12 ist ein Enddruck pz erreicht, mit dem das umgesetzte Reaktionsgasgemisch 9a in die Gasaustrittshaube 8 eintritt und auch aus dieser austritt.

Auf diese Weise ist sowohl die sichere Zudosierung der jeweiligen gewünschten Teilstrom-Sollmengen V₁, V₂, V₃, V₄ gewährleistet, als auch eine optimale Einstellung der Geschwindigkeitsverteilung über die gesamte Katalysatorfüllung 12, so daß eine Verbesserung an einer Stelle nicht mit einer Verschlechterung an einer anderen Stelle erkauft wird.

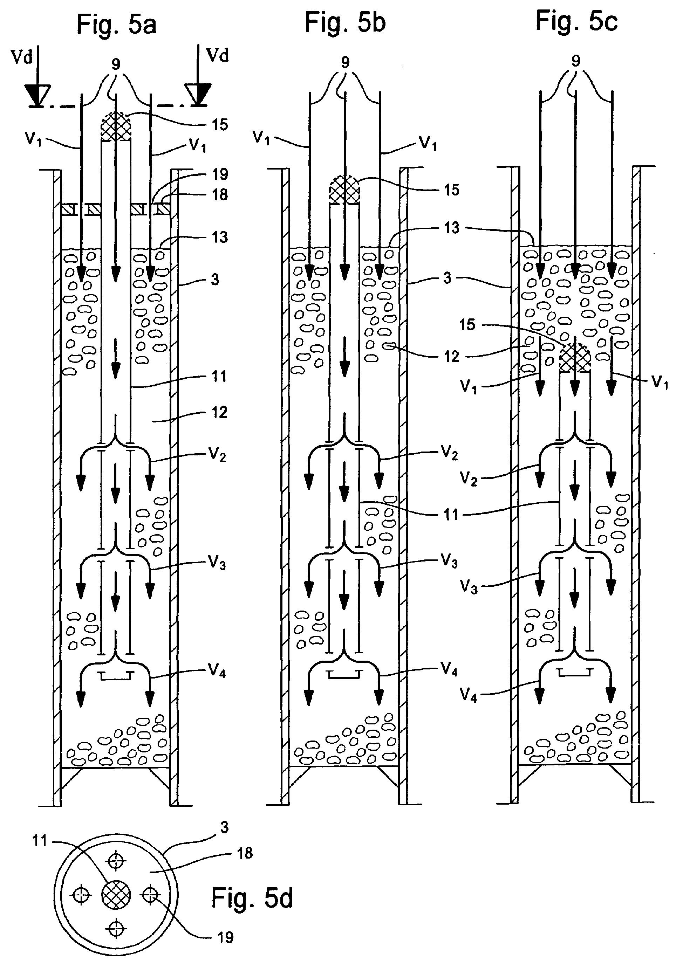

In den Figuren 5a bis 5d sind alternative Anordnungen für das in Figur 1 dargestellte Dosierrohr 11 in einem Reaktionsrohr 3 dargestellt.

Figur 5a zeigt ein Ausführungsbeispiel, bei dem das gaseintrittsseitige Ende des Reaktionsrohrs 3 zwischen Dosierrohr 11 und Reaktionsrohrinnenwand mit einer kreisringförmigen Drosselscheibe 18 versehen ist. Die Drosselscheibe 18 ist an ihrem Außenumfang gasdicht an der Reaktionsrohrinnenwand befestigt. In der Mitte wird die Drosselscheibe 18 von dem Dosierrohr 11 durchlaufen, das ebenfalls gasdicht mit der Drosselscheibe 18 verbunden ist. In der Drosselscheibe 18 sind vier um 90° zueinander versetzte Drosselbohrungen 19 angeordnet (Figur 5d), durch die hindurch Reaktionsgasgemisch 9 in die Anfangsfläche 13 der Katalysatorfüllung 12 mit einem gewünschten Druck eintritt, der sich von dem Anfangsdruck po in der Gaseintrittshaube 7 bzw. in dem Dosierrohr 11 unterscheidet.

Solche Drosseleinrichtungen 18 können in angepaßter Ausbildung bei jeder Ausführungsform der Erfindung eingebaut sein. Sie können auch innerhalb der Katalysatorschüttung 12 vor oder an einer beliebigen Stelle längs der Zudosiereinrichtung 11 angeordnet sein.

In einer weiteren, in Figur 5b dargestellten Ausführungsform ragt das Dosierrohr 11 zwar aus der Anfangsfläche 13 der Katalysatorschüttung 12 vor, endet jedoch noch innerhalb des Reaktionsrohrs 3. Bei dieser Ausführungsform bleibt der Rohrboden während der Montage leicht begehbar.

Wie in Figur 5c dargestellt, kann das Dosierrohr 11 auch vollständig in der Katalysatorfüllung 12 eingebettet sein, d. h. das gaseintrittsseitige Ende des Dosierrohrs 11 tritt nicht aus der Katalysatorfüllung 12 heraus. Die erste Teilung des das Reaktionsrohr 3 durchströmenden Reaktionsgasgemischstroms 9 erfolgt hierbei erst in der Katalysatorfüllung 12, d. h. der Druck im Dosierrohr 11 entspricht nicht dem Anfangsdruck p₀ an der Anfangsfläche 13 der Katalysatorschüttung 12 bzw. in der Gaseintrittshaube 7.

Die in Figur 6 dargestellte Ausführungsform eines Dosierrohrs 11 enthält neben den Gasaustrittsöffnungen 17 in der Dosierrohrwand, die Horizontaldrosseln ausbilden und durch die die jeweiligen Teilstrom-Sollmengen V₂, V₃, V₄ austreten, auch noch Längsdrosseln 20, 21,22 in Längsrichtung des Dosierrohrs 11, die den Druck im Dosierrohr 11 um ein jeweils vorgegebenes Maß reduzieren.

Die erste Längsdrossel 20 ist am gaseintrittsseitigen Ende des Dosierrohrs 11 (Stelle A) angeordnet und reduziert den dort anliegenden Anfangsdruck po, der auch an der Anfangsfläche 13 der Katalysatorfüllung 12 (Stelle B) anliegt, um ein Maß Δp_{IA} auf einen Druck p_{IA} im Dosierrohr 11 direkt hinter der Stelle A.

Eine zweite Längsdrossel 21 an der Stelle D reduziert den dort anliegenden Druck p_{IA} um ein Maß Δp_{ID} auf den Druck p_{ID}. Eine dritte Längsdrossel 22 reduziert an der Stelle F den dort anliegenden Druck p_{ID} um das Maß Δp_{IF} auf den Druck p_{IF}.

Der das Reaktionsrohr 3 durchströmende Reaktionsgasgemischstrom 9 wird wie bei den Ausführungsformen des Dosierrohrs 11 gemäß den Figuren 1, 5a, 5b in einem ersten Teilstrom V₁ in die Anfangsfläche 13 der Katalysatorfüllung 12 und in einem zweiten Teilstrom in das Dosierrohr 11 eingeleitet.

An den Stellen C, E, G sind im Dosierrohr 11 Gasaustrittsöffnungen 17 angeordnet, die die gewünschten Teilstrom-Sollmengen V₂, V₃, V₄ in die Katalysatorfüllung 12 zudosieren. Dabei liegt die Stelle C zwischen der ersten und der zweiten Längsdrossel 20, 21, die Stelle E zwischen der zweiten und der dritten Längsdrossel 21,22 und die Stelle G zwischen der dritten Längsdrossel 22 und dem geschlossenen Ende 16 des Dosierrohrs 11.

Mit den Längsdrosseln 20, 21, 22 wird erreicht, daß der Anteil des Strömungswiderstandes, der für die jeweilige Stelle der Zudosierung für die dort gewünschte Teilstrom-Sollmenge von den Gasaustrittsöffnungen bzw. Horizontaldrosseln 17 bereitgestellt werden muß, geringer wird, da die Längsdrosseln, die sich stromaufwärts der Zudosierstelle befinden, bereits einen Anteil des Strömungswiderstandes aufgebaut haben. Der Strömungswiderstand für die jeweiligen Zudosierstellen kann also bei dieser Ausführungsform durch eine beliebige Kombination der Gasaustrittsöffnungen 17 an der jeweiligen Zudosierstelle und der jeweils stromaufwärts befindlichen Längsdrosseln eingestellt werden.

In Figur 7 sind die Druckverläufe in dem Dosierrohr 11 und in der Katalysatorfüllung 12 als Kuven p_{I} und p_{II} dargestellt.

Die in der Druckverlaufskurve p_{I} des Dosierrohrs 11 enthaltenen Stufen Δp_{IA}, Δp_{ID}, Δp_{IF} sind die Druckverluste bzw. die entsprechenden Strömungswiderstände infolge der Längsdrosseln 20, 21, 22, wie oben bereits beschrieben.

Die Druckverlaufskurve p_{II} der Katalysatorfüllung 12 wird ermittelt wie weiter oben im Zusammenhang mit Figur 4 beschrieben. An den Zudosierstellen C, E, G in der Katalysatorfüllung 12 herrschen die Drücke P_{IIC}, P_{IIE}, P_{IIG}. Im weiteren Verlauf herrscht in der Katalysatorfüllung 12 der Druck p_{IIH} an einer Stelle H. Die Druckabfälle von Zudosierstelle zu Zudosierstelle sind bezeichnet als Δp_{IIBC}, Δp_{IICE}, Δp_{IIEG}, Δ_{PIIGH}.

Dabei sind die Druckverläufe innerhalb des Dosierrohrs 11 und der Katalysatorfüllung 12 in ihrer Beziehung zueinander zwischen den Zudosierstellen keinen Einschränkungen unterworfen. So kann es z. B. vorkommen, daß - wie in Figur 7 bei der Stelle F gezeigt - der Druck p_{I} im Dosierrohr 11 bereichsweise sogar noch unter den Druck p_{II} der benachbarten Katalysatorfüllung 12 fallen kann. Durch den Druckverlust innerhalb der Katalysatorfüllung 12 ist der Druck p_{II} in dieser an der Zudosierstelle G wieder kleiner als der Druck p_{I} im Dosierrohr 11, so daß es wie gewünscht zur Abströmung der festgelegten Teilstrom-Sollmenge kommt.

Die Anteile der Strömungswiderstände, die die Gasaustrittsöffnungen 17 an jeder Zudosierstelle noch aufweisen müssen, um den Gesamt-Strömungswiderstand für diese Zudosierstelle erfindungsgemäß einzustellen, entsprechen der Differenz zwischen dem Druck, der an der Zudosierstelle im Dosierrohr 11 herrscht, und dem Druck, der an der Zudosierstelle in der Katalysatorfüllung 12 vorhanden ist. Diese Anteile des jeweiligen erforderlichen Strömungswiderstandes sind in Figur 7 angegeben als Δp_{c}, Δp_{E}, Ap_{G}. Der für jede Zudosierstelle eingestellte (Gesamt)Strömungswiderstand ergibt sich aus dem Anteil der Gasaustrittsöffnungen bzw. Horizontaldrosseln 17 an der Zudosierstelle und den jeweils stromaufwärts angeordneten Längsdrosseln. So entspricht z. B. der (gesamte) Strömungswiderstand für die Stelle G der Summe der Druckdifferenzen Δp_{G}, Δp_{IF}, Δp_{ID}, Δp_{IA}.

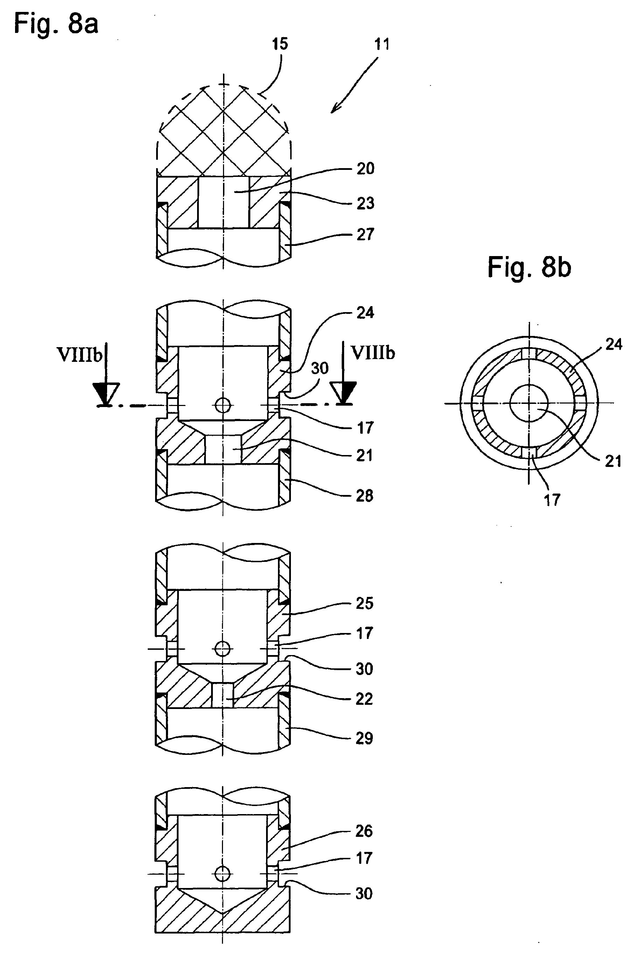

Die Figuren 8a und 8b zeigen das in Figur 6 schematisch dargestellte Dosierrohr 11 in konstruktiv ausgebildeter, detaillierter Darstellung. Die Längsdrosseln 20, 21, 22 sind jeweils als Längsbohrungen ausgeführt, und die Gasaustrittsöffnungen bzw. Horizontaldrosseln 17 - d. h. die Zudosierstellen - als jeweils vier Horizontalbohrungen, die um 90° zueinander versetzt um den Umfang herum verteilt sind.

Das Dosierrohr 11 weist vier Formstücke 23, 24, 25, 26 auf, zwischen denen jeweils ein Rohrabschnitt 27, 28, 29 gesetzt ist, der an die benachbarten Formstücke jeweils gasdicht angeschlossen ist. Die Formstücke bilden jeweils Bohrungen für die Längsdrosseln 20, 21, 22 und die Gasaustrittsöffnungen 17 aus.

Die Längsdrosseln 20, 21, 22 sind in den in Strömungsrichtung ersten drei Formstücken 23, 24 25 jeweils durch eine Längsbohrung mit vorgegebenem Durchmesser ausgebildet. Das in Strömungsrichtung letzte Formstück 26 enthält keine Längsbohrung, sondern ist in Längsrichtung verschlossen. Die Durchmesser der Längsbohrungen nehmen von der ersten Längsdrossel 20 am gaseintrittsseitigen Ende des Dosierrohrs 11 über die zweite Längsdrossel 21 bis zur dritten Längsdrossel 22 jeweils um ein vorgegebenes Maß ab. Auf dem ersten Formstück 23 ist auf der gaseintrittsseitigen Oberfläche der Partikelfilter 15 befestigt. Die Ausbildung des Partikelfilters 15 ist beliebig und den jeweiligen Erfordernissen angepaßt.

Das zweite, dritte und letzte Formstück 24, 25, 26 enthalten jeweils vier Gasaustrittsöffnungen 17, die jeweils als Horizontalbohrung 17 ausgeführt und zueinander um 90° versetzt um den Umfang des Formstücks herum angeordnet sind. Die Horizontalbohrungen weisen jeweils einen vorgegebenen Durchmesser auf, der im dargestellten Fall für alle Formstücke 24, 25, 26 gleich ist. Radial außen enden die Horizontalbohrungen 17 jeweils in einer Umfangsnut 30, um ihr Verstopfen durch Katalysatorpartikel 12 zu verhindern. Hierzu kann die Nut auch noch mit einem (nicht dargestellten Gitter) abgedeckt sein.

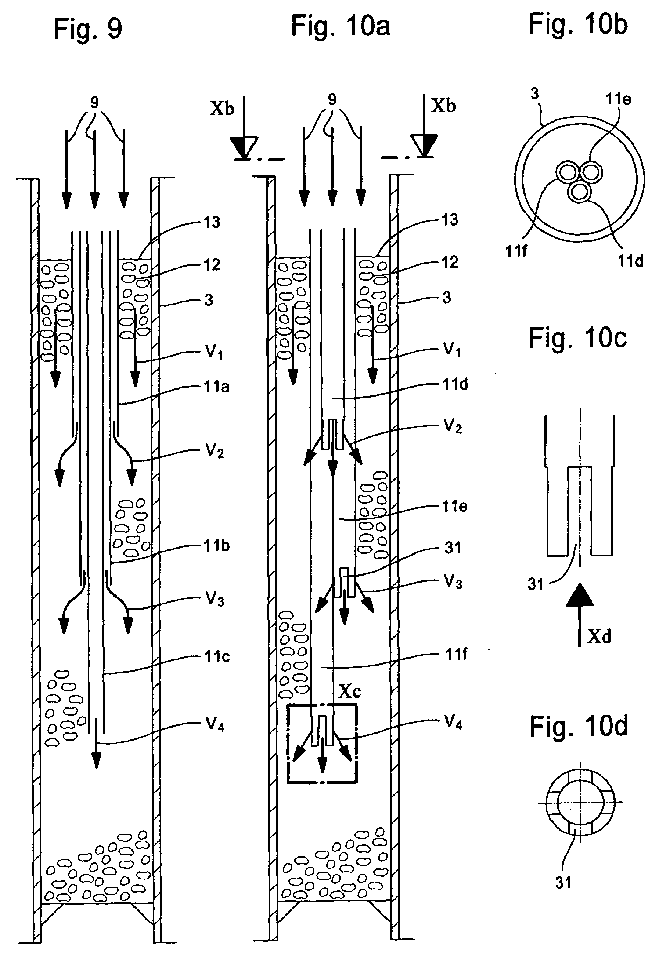

Die Figuren 9 und 10a zeigen Ausführungsbeispiele, bei denen die Zudosiereinrichtung aus mehreren Dosierrohren - in den gezeigten Beispielen aus jeweils drei Dosierrohren 11a, 11 b, 11c bzw. 11d, 11 e, 11f - gebildet ist. Durch jedes Dosierrohr strömt ein einzelner Teilstrom V₂, V₃, V₄. Die Dosierrohre sind unterschiedlich lang und enden jeweils an der vorgesehenen Zudosierstelle, wo der jeweilige Teilstrom an dem Ende des Dosierrohrs austritt bzw. in die Katalysatorfüllung 12 eintritt. Die für die jeweiligen Zudosierstellen erforderlichen Strömungswiderstände werden bei diesen Ausführungsbeispielen im wesentlichen durch die Reibungsverluste im Dosierrohr eingestellt. Zusätzlich können sie aber auch noch durch eine entsprechende Ausbildung des Gasaustrittes am Dosierrohrende eingestellt werden.

Figur 9 zeigt drei konzentrische ineinandergesteckte Dosierrohre 11a, 11b, 11c, die aus der Anfangsfläche 13 der Katalysatorfüllung 12 vorragen. Der Raum zwischen den Außenwandungen der Dosierrohre 11a, 11b, 11c und der Reaktionsrohrinnenwand ist mit Katalysatorpartikeln 12 gefüllt. Die Innenräume der Dosierrohre 11 a, 11 b, 11c sind frei von Katalysatorpartikeln 12.

Der Zwischenraum zwischen dem äußeren Dosierrohr 11a und der Reaktionsrohrinnenwand ist offen, so daß dort Reaktionsgasgemisch 9 in die Anfangsfläche 13 der Katalysatorfüllung 12 eintreten kann.

Der das Reaktionsrohr 3 durchströmende Reaktionsgasgemischstrom 9 tritt also mit einem Teilstrom V₁ in die Anfangsfläche 13 der Katalysatorfüllung 12 und mit weiteren drei Teilströmen V₂, V₃, V₄ in die drei konzentrischen Dosierrohre 11a, 11b, 11c ein.

Bei dem Ausführungsbeispiel gemäß Figur 10a weisen die Dosierrohre 11d, 11e, 11f gleiche Durchmesser auf und verlaufen nebeneinander und parallel zueinander (Figur 10b). In ihren Endbereichen weisen die Dosierrohre 11d, 11e, 11f vier Längsschlitze 31 auf, die zueinander um 90° versetzt um den Außenumfang des Dosierrohrs herum angeordnet sind und in die Endstirnfläche der Dosierrohre 11d, 11e, 11f münden (Figur 10c und 10d). Die Längsschlitze 31 vergrößern die Austrittsfläche der Dosierrohre 11d, 11e, 11f, um dem Reaktionsgasgemisch 9 ein ungehindertes Ausströmen aus dem Dosierrohr bzw. ein ungehindertes Einströmen in die Katalysatorfüllung 12 zu ermöglichen.

Der Gaseintrittsbereich des Reaktionsrohrs 3 und der Dosierrohre 11d, 11e, 11f kann z. B. entsprechend den in den Figuren 1, 5a, 5b und 5c dargestellten Ausführungsbeispielen ausgeführt sein, also mit oder ohne Partikelfilter auf dem gaseintrittsseitigen Ende der Dosierrohre, mit oder ohne Drossel außerhalb der Dosierrohre im Reaktionsrohr, mit oder ohne einem Vorragen der Dosierrohre aus dem Reaktionsrohr und mit oder ohne einem Vorragen der Dosierrohre aus der Anfangsfläche der Katalysatorfüllung 12.

Es versteht sich, daß die Erfindung nicht auf die dargestellten Ausführungsbeispiele beschränkt ist, sondern im Rahmen der Erfindung weitere Ausgestaltungen und Modifikationen möglich sind, die die erfindungsgemäße technische Lehre verwirklichen.

## Patentansprüche

1. Verfahren zur Durchführung endothermer oder exothermer Gasphasenreaktionen, unter Verwendung eines Rohrbündelreaktors (1) mit einem Rohrbündel (2) katalysatorgefüllter Reaktionsrohre (3), deren Innenraum jeweils nur einen einzigen Katalysatorraum ausbildet, mit den folgenden Schritten:
a) Zuführen nur eines Reaktionsgasgemischstroms (9) zu den Reaktionsrohren (3);
b) Teilen des die Reaktionsrohre (3) jeweils durchströmenden Reaktionsgasgemischstroms (9) in mindestens zwei Teilströme (V₁, V₂, V₃, V₄), wobei jeder Teilstrom (V₁, V₂, V₃, V₄) dieselbe Zusammensetzung aufweist;
wobei für den Katalysatorraum folgende Schritte durchgeführt werden:
c) Zudosieren jedes Teilstroms (V₁, V₂, V₃, V₄) an Stellen längs der Katalysatorfüllung (12), an denen die Strömungsgeschwindigkeit des Reaktionsgemisches (9) in der Katalysatorfüllung (12) einen vorgegebenen Wert unterschreitet;
d) Festlegen von Teilstrom-Sollmengen für jeden Teilstrom (V₁, V₂, V₃, V₄);
e) Ermitteln des Druckes an der Stelle der ersten Teilung des Reaktionsgasgemischstroms (9);
f) Ermitteln des Druckes in der Katalysatorfüllung (12) an der Stelle der Zudosierung des jeweiligen Teilstroms (V₁, V₂, V₃, V₄) ;
g) Einstellen des Strömungswiderstandes für jede Stelle der Zudosierung so, daß der Strömungswiderstand bei der Teilstrom-Sollmenge der Druckdifferenz zwischen den in den Schritten e) und f) bestimmten Drücken entspricht.

2. Verfahren nach Anspruch 1, **dadurch gekennzeichnet, daß** die erste Teilung vor der Katalysatorfüllung (12) durchgeführt wird.

3. Verfahren nach Anspruch 2, **dadurch gekennzeichnet, daß** der erste Teilstrom (V₁) in den Anfangsbereich der Katalysatorfüllung (12) zudosiert wird.

4. Verfahren nach Anspruch 3, **dadurch gekennzeichnet, daß** der erste Teilstrom (V₁) in die Anfangsfläche (13) der Katalysatorfüllung (12) zudosiert wird.

5. Verfahren nach Anspruch 1, **dadurch gekennzeichnet, daß** die erste Teilung in der Katalysatorfüllung (12) durchgeführt wird.

6. Rohrbündelreaktor zur Durchführung endothermer oder exothermer Gasphasenreaktionen, mit einem Rohrbündel katalysatorgefüllter Reaktionsrohre, deren Innenraum jeweils nur einen einzigen Katalysatorraum ausbildet und deren eine Enden von einer Gaseintrittshaube und deren andere Enden von einer Gasaustrittshaube überspannt werden und die jeweils von einem Reaktionsgasgemisch durchströmt werden und die jeweils eine Zudosiereinrichtung aufweisen, die zumindest teilweise in die Katalysatorfüllung eingebettet ist und den das Reaktionsrohr durchströmenden Reaktionsgasgemischstrom in mindestens zwei Teilströme teilt, wobei die Zudosiereinrichtung Einrichtungen aufweist, die jeden Teilstrom an unterschiedlichen Stellen längs der Katalysatorfüllung dieser mit einem vorhandenen Strömungswiderstand zudosieren, **dadurch gekennzeichnet, daß** die Gaseintrittshaube (7) die einzige Zuleitung für das Reaktionsgasgemisch (9) ausbildet,
alle Teilströme (V₁, V₂, V₃, V₄) dieselbe Zusammensetzung aufweisen,
die Einrichtungen (17,20,21,22) an Stellen längs der Katalysatorfüllung (12) angeordnet sind, an denen die Strömungsgeschwindigkeit des Reaktionsgasgemisches (9) in der Katalysatorfüllung (12) einen vorgegebenen Wert unterschreitet, und
der Strömungswiderstand der Einrichtungen (17,20,21,22) jeweils so eingestellt ist, daß an jeder Stelle der Zudosierung bei einer für die jeweilige Stelle vorgegebenen Teilstrom-Sollmenge der Strömungswiderstand der Druckdifferenz zwischen dem Druck an der Stelle der ersten Teilung des Reaktionsgasgemischstroms (9) und dem Druck in der Katalysatorfüllung (12) an der Stelle der Zudosierung entspricht.

7. Rohrbündelreaktor nach Anspruch 6, **dadurch gekennzeichnet, daß** die Zudosiereinrichtung (11, 11a -11f) aus dem Reaktionsrohr (3) vorragt.

8. Rohrbündelreaktor nach Anspruch 6, **dadurch gekennzeichnet, daß** die Zudosiereinrichtung (11, 11a - 11f) im Reaktionsrohr (3) versenkt angeordnet ist.

9. Rohrbündelreaktor nach Anspruch 8, **dadurch gekennzeichnet, daß** die Zudosiereinrichtung (11, 11a - 11f) aus der Katalysatorfüllung (12) vorragt.

10. Rohrbündelreaktor nach Anspruch 8, **dadurch gekennzeichnet, daß** die Zudosiereinrichtung (11, 11a- 11f) in der Katalysatorfüllung (12) versenkt ist.

11. Rohrbündelreaktor nach einem der Ansprüche 6 bis 10, **dadurch gekennzeichnet, daß** die Zudosiereinrichtung als mindestens ein Dosierrohr (11) ausgebildet ist, das zentrisch im Reaktionsrohr (3) angeordnet ist und in seiner Wand Gasaustrittsöffnungen (17) an den Stellen der Zudosierung aufweist.

12. Rohrbündelreaktor nach Anspruch 11, **dadurch gekennzeichnet, daß** die Zudosiereinrichtung (11) Drosseln (17, 20, 21, 22) mit einem jeweils vorgegebenen Strömungswiderstand aufweist.

13. Rohrbündelreaktor nach Anspruch 12, **dadurch gekennzeichnet, daß** die Drosseln im wesentlichen durch die Gasaustrittsöffnungen (17) ausgebildet sind.

14. Rohrbündelreaktor nach Anspruch 13, **dadurch gekennzeichnet, daß** die Drosseln als Drosselbohrungen (17) ausgebildet sind, die in eine Aussparung (30) in der Außenwandung des jeweiligen Dosierrohrs (11) münden.

15. Rohrbündelreaktor nach Anspruch 12, **dadurch gekennzeichnet, daß** die Drosseln im wesentlichen als Längsbohrungen (20, 21, 22) in jedem Dosierrohr (11) stromaufwärts der jeweiligen Gasaustrittsöffnungen (17) ausgebildet sind.

16. Rohrbündelreaktor nach Anspruch 11, **dadurch gekennzeichnet, daß** der an der Stelle der Zudosierung jeweils erforderliche Strömungswiderstand im wesentlichen durch Reibungsverluste in jedem Dosierrohr (11) gebildet ist.

17. Rohrbündelreaktor nach Anspruch 12, **dadurch gekennzeichnet, daß** der an der Stelle der Zudosierung jeweils erforderliche Strömungswiderstand durch eine Kombination von Drosseln (17, 20, 21, 22), insbesondere gemäß den Ansprüchen 13, 14 und/oder 15, und/oder Reibungsverlusten in jedem Dosierrohr (11) gebildet ist.

18. Rohrbündelreaktor nach einem der Ansprüche 6 bis 17, **dadurch gekennzeichnet, daß** die Zudosiereinrichtung mehrere Dosierrohre (11a, 11b, 11c; 11d, 11e, 11f) aufweist.

19. Rohrbündelreaktor nach Anspruch 18, **dadurch gekennzeichnet, daß** die Dosierrohre (11 a, 11 b, 11 c; 11 d, 11 e, 11 f) unterschiedliche Längen aufweisen, wobei die Dosierrohre jeweils von einem Teilstrom (V₂, V₃, V₄) durchströmt werden und an der Stelle der Zudosierung enden und dort Öffnungen aufweisen.

20. Rohrbündelreaktor nach Anspruch 19, **dadurch gekennzeichnet, daß** die Dosierrohre (11 a, 11 b, 11 c) konzentrisch ineinanderstecken.

21. Rohrbündelreaktor nach Anspruch 19, **dadurch gekennzeichnet, daß** die Dosierrohre (11d, 11e, 11f) parallel zueinander verlaufen.

22. Rohrbündelreaktor nach einem der Ansprüche 6 bis 21, **dadurch gekennzeichnet, daß** am Gaseintritt der Zudosiereinrichtung (11, 11a - 11f) ein Partikelfilter (15) angeordnet ist.

23. Rohrbündelreaktor nach einem der Ansprüche 6 bis 22, **dadurch gekennzeichnet, daß** in den Reaktionsrohren (3) zusätzlich zur Zudosiereinrichtung (11, 11a - 11f) mindestens eine Einrichtung (18) zur Erhöhung des Druckverlustes angeordnet ist.

## Claims

1. Method for carrying out endothermic or exothermic gas phase reactions by using a tube bundle reactor (1) with a tube bundle (2) of catalyst-filled reaction tubes (3), the inner space of which respectively forms only a single catalyst space, the method comprising the following steps:
a) Supplying only one reaction gas mixture flow (9) to the reaction tubes (3);
b) Dividing-up the reaction gas mixture flow (9) flowing through each of the reaction tubes (3) into at least two partial flows (V₁, V₂, V₃, V₄), each partial flow (V₁, V₂, V₃, V₄) having the same composition;
the following steps being carried out for the catalyst space:
c) Feeding-in of each partial flow (V₁, V₂, V₃, V₄) at points along the catalyst filling (12) at which the flow rate of the reaction gas mixture (9) in the catalyst filling (12) goes below a predetermined value;
d) Determining the desired partial flow volume for each partial flow (V₁, V₂, V₃, V₄) ;
e) Calculating the pressure at the point of the first division of the reaction gas mixture flow (9);
f) Calculating the pressure in the catalyst filling (12) at the point of feeding-in of each partial flow (V₁, V₂, V₃, V₄);
g) Setting of flow resistance for each point of feeding-in in such a way that the flow resistance at the desired partial flow volume corresponds to the pressure difference between the pressures determined in steps e) and f).

2. Method as claimed in claim 1 **characterised in that** the first division is performed before the catalyst filling (12).

3. Method as claimed in claim 2 **characterised in that** the first partial flow (V₁) is feeded into the front region of the catalyst filling (12).

4. Method as claimed in claim 3 **characterised in that** the first partial flow (V₁) is feeded into the front surface (13) of the catalyst filling (12).

5. Method as claimed in claim 1 **characterised in that** the first division is performed in the catalyst filling (12).

6. Tube bundle reactor for carrying out endothermic or exothermic gas phase reactions, comprising a tube bundle of catalyst-filled reaction tubes, the inner space of which respectively forms only a single catalyst space and the one ends of which are spanned by a gas inlet hood and the other ends of which are spanned by a gas outlet hood and through each of which a reaction gas mixture flows and each of which has a feeding-in device that is at least partially embedded in the catalyst filling and that divides up the reaction gas mixture flow flowing through the reaction tube into at least two partial flows, the feeding-in device having devices which feed in each partial flow at different points along the catalyst filling thereinto with an existing flow resistance, **characterized in that**
the gas inlet hood (7) forms the only supply conduit for the reaction gas mixture (9),
all the partial flows (V₁, V₂, V₃, V₄) have the same composition,
the devices (17, 20, 21, 22) are arranged at points along the catalyst filling (12) at which the flow rate of the reaction gas mixture (9) in the catalyst filling (12) goes below a predetermined value and
the flow resistance of the devices (17, 20, 21, 22) is in each case set in such a manner that at each point of feeding-in and at a desired partial flow volume specified for each respective point the flow resistance corresponds to the pressure difference between the pressure at the point of the first division of the reaction gas mixture flow (9) and the pressure in the catalyst filling (12) at the point of feeding-in.

7. Tube bundle reactor as claimed in claim 6 **characterised in that** the feeding-in device (11, 11a - 11f) protrudes from the reaction tube (3).

8. Tube bundle reactor as claimed in claim 6 **characterised in that** the feeding-in device (11, 11a - 11f) is arranged sunken in the reaction tube (3).

9. Tube bundle reactor as claimed in claim 8 **characterised in that** the feeding-in device (11, 11a - 11f) protrudes from the catalyst filling (12).

10. Tube bundle reactor as claimed in claim 8 **characterised in that** the feeding-in device (11, 11a - 11f) is sunk in the catalyst filling (12).

11. Tube bundle reactor as claimed in one of the claims 6 through 10 **characterised in that** the feeding-in device is formed as at least one feeder tube (11) that is located centrically in the reaction tube (3) and has in its wall gas outlet orifices (17) at the points of feeding-in.

12. Tube bundle reactor as claimed in claim 11 **characterised in that** the feeding-in device (11) comprises throttles (17, 20, 21, 22) each having a specified flow resistance.

13. Tube bundle reactor as claimed in claim 12 **characterised in that** the throttles are essentially formed by the gas outlet orifices (17).

14. Tube bundle reactor as claimed in claim 13 **characterised in that** the throttles are formed as throttle ports (17) that open into a recess (30) in the outer wall of the respective feeder tube (11).

15. Tube bundle reactor as claimed in claim 12 **characterised in that** the throttles are essentially formed as longitudinal ports (20, 21, 22) in each feeder tube (11) upstream of the respective gas outlet orifices (17).

16. Tube bundle reactor as claimed in claim 11 **characterised in that** the flow resistance required at each point of feeding-in is essentially formed through friction losses in each feeder tube (11).

17. Tube bundle reactor as claimed in claim 12 **characterised in that** the flow resistance required at each point of feeding-in is formed by a combination of throttles (17, 20, 21, 22), in particular in accordance with the claims 13, 14 and/or 15, and/or friction losses in each feeder tube (11).

18. Tube bundle reactor as claimed in one of claims 6 through 17 **characterised in that** the feeding-in device comprises several feeder tubes (11a, 11b, 11c; 11d, 11e, 11f).

19. Tube bundle reactor as claimed in claim 18 **characterised in that** the feeder tubes (11a, 11b, 11c; 11d, 11e, 11f) have different lengths wherein each partial flow (V₂, V₃, V₄) flows through an associated feeder tube, and wherein each feeder tube ends at its point of feeding-in and has orifices there.

20. Tube bundle reactor as claimed in claim 19 **characterised in that** the feeder tubes (11a, 11b, 11c) are inserted into each other concentrically.

21. Tube bundle reactor as claimed in claim 19 **characterised in that** the feeder tubes (11d, 11e, 11f) run parallel to each other.

22. Tube bundle reactor as claimed in claims 6 through 21 **characterised in that** at the gas inlet of the feeding-in device (11, 11a - 11f) a particle filter (15) is provided.

23. Tube bundle reactor as claimed in one of the claims 6 through 22 **characterised in that** in the reaction tubes (3), additionally to the feeding-in device (11, 11a - 11f), at least one device (18) is provided for increasing the pressure drop.

## Revendications

1. Procédé pour exécuter des réactions endothermiques ou exothermiques en phase gazeuse, en utilisant un réacteur à faisceau de tubes (1) avec un faisceau de tubes (2) constitué de tubes de réaction (3) remplis d'un catalyseur, dont le volume intérieur forme respectivement seulement un unique volume de catalyseur, présentant les étapes suivantes :
a) on admet uniquement un courant d'un mélange de gaz de réaction (9) vers les tubes de réaction (3) ;
b) on divise le courant de mélange de gaz de réaction (9) qui s'écoule respectivement à travers les tubes de réaction (3) en au moins deux courants partiels (V1, V2, V3, V4), chaque courant partiel (V1, V2, V3, V4) présentant la même composition ;
et pour le volume de catalyseur on exécute les étapes suivantes :
c) on amène de façon dosée chaque courant partiel (V1, V2, V3, V4) à des emplacements, le long de la charge de catalyseur (12), auxquels la vitesse d'écoulement du mélange de réaction (9) dans la charge de catalyseur (12) passe au-dessous d'une valeur prédéterminée ;
d) on fixe des quantités de consigne pour chaque courant partiel (V1, V2, V3, V4) ;
e) on détermine la pression à l'emplacement de la première division du courant de mélange de gaz de réaction (9) ;
f) on détermine la pression dans la charge de catalyseur (12) à l'emplacement de l'amenée dosée du courant partiel respectif (V1, V2, V3, V4) ;
g) on règle la résistance à l'écoulement pour chaque emplacement de l'amenée dosée de telle façon que la résistance à l'écoulement pour la quantité de consigne correspond à la différence de pression entre les pressions déterminées dans les étapes e) et f).

2. Procédé selon la revendication 1, **caractérisé en ce que** la première division est exécutée avant la charge de catalyseur (12).

3. Procédé selon la revendication 2, **caractérisé en ce que** le premier courant partiel (V1) est amené de manière dosée dans la zone au début de la charge de catalyseur (12).

4. Procédé selon la revendication 3, **caractérisé en ce que** le premier courant partiel (V1) est amené de manière dosée dans la surface (13) au début de la charge de catalyseur (12).

5. Procédé selon la revendication 1, **caractérisé en ce que** la première division est exécutée dans la charge de catalyseur (12).

6. Réacteur à faisceau tubulaire pour exécuter des réactions endothermiques ou exothermiques en phase gazeuse, comprenant un faisceau de tubes constitué de tubes de réaction remplis d'un catalyseur, dont le volume intérieur forme respectivement seulement un unique volume de catalyseur, dont l'une des extrémités est coiffée par un capot d'entrée de gaz et dont l'autre extrémité est coiffée par un capot de sortie de gaz, et qui sont respectivement traversés par un mélange de gaz de réaction et présentent respectivement des moyens d'amenée dosée, ces derniers étant au moins partiellement noyés dans la charge de catalyseur et divisant le courant de mélange de gaz de réaction qui s'écoule à travers le tube de réaction en au moins deux courants partiels, lesdits moyens d'amenée dosée comprenant des moyens qui amènent chaque courant partiel de manière dosée à des emplacements différents le long de la charge de catalyseur avec une résistance à l'écoulement donnée, **caractérisé en ce que**
le capot d'entrée de gaz (7) forme l'unique amenée pour le mélange de gaz de réaction (9),
tous les courants partiels (V1, V2, V3, V4) présentent la même composition,
les moyens (17, 20, 21, 22) sont agencés à des emplacements, le long de la charge de catalyseur (12), auxquels la vitesse d'écoulement du mélange de gaz de réaction (9) dans la charge de catalyseur (12) passe au-dessous d'une valeur prédéterminée, et la résistance à l'écoulement desdits moyens (17, 20, 21, 22) est respectivement réglée de telle façon qu'à chaque emplacement de l'amenée dosée, pour une quantité de consigne prédéterminée pour l'écoulement partiel pour l'emplacement respectif, la résistance à l'écoulement correspond à la différence de pression entre la pression à l'emplacement de la première division du courant de mélange de gaz de réaction (9) et la pression dans la charge de catalyseur (12) à l'emplacement de l'amenée dosée.

7. Réacteur à faisceau tubulaire selon la revendication 6, **caractérisé en ce que** les moyens d'amenée dosée (11, 11a-11f) dépassent hors du tube de réaction (3).

8. Réacteur à faisceau tubulaire selon la revendication 6, **caractérisé en ce que** les moyens d'amenée dosée (11, 11a-11f) sont agencés en renfoncement dans le tube de réaction (3).

9. Réacteur à faisceau tubulaire selon la revendication 8, **caractérisé en ce que** les moyens d'amenée dosée (11, 11a-11f) dépassent hors de la charge de catalyseur (12).

10. Réacteur à faisceau tubulaire selon la revendication 8, **caractérisé en ce que** les moyens d'amenée dosée (11, 11a-11f) sont en renfoncement dans la charge de catalyseur (12).

11. Réacteur à faisceau tubulaire selon l'une des revendications 6 à 10, **caractérisé en ce que** les moyens d'amenée dosée sont réalisés sous forme d'au moins un tube de dosage (11), lequel est agencé au centre dans le tube de réaction (3) et présente dans sa paroi des ouvertures de sortie de gaz (17) aux emplacements de l'amenée dosée.

12. Réacteur à faisceau tubulaire selon la revendication 11, **caractérisé en ce que** les moyens d'amenée dosée (11) présentent des étranglements (17, 20, 21, 22) avec une résistance à l'écoulement respectivement prédéterminée.

13. Réacteur à faisceau tubulaire selon la revendication 12, **caractérisé en ce que** les étranglements sont sensiblement formés par les ouvertures de sortie de gaz (17).

14. Réacteur à faisceau tubulaire selon la revendication 13, **caractérisé en ce que** les étranglements sont réalisés sous forme de perçages à étranglements (17), lesquels débouchent dans une échancrure (30) dans la paroi extérieure du tube de dosage respectif (11).

15. Réacteur à faisceau tubulaire selon la revendication 12, **caractérisé en ce que** les étranglements sont formés sensiblement sous forme de perçages longitudinaux (20, 21, 22) dans chaque tube de dosage (11) en amont des ouvertures de sortie de gaz (17) respectives.

16. Réacteur à faisceau tubulaire selon la revendication 11, **caractérisé en ce que** la résistance à l'écoulement respectivement nécessaire à l'emplacement de l'amenée dosée est formée essentiellement par des pertes par friction dans chaque tube de dosage (11).

17. Réacteur à faisceau tubulaire selon la revendication 12, **caractérisé en ce que** la résistance à l'écoulement respectivement nécessaire à l'emplacement de l'amenée dosée est formée par une combinaison d'étranglements (17, 20, 21, 22), en particulier d'après les revendications 13, 14 et/ou 15, et/ou par des pertes par friction dans chaque tube de dosage (11).

18. Réacteur à faisceau tubulaire selon l'une des revendications 6 à 17, **caractérisé en ce que** les moyens d'amenée dosée comprennent plusieurs tubes de dosage (11a, 11b, 11c ; 11d, 11e, 11f).

19. Réacteur à faisceau tubulaire selon la revendication 18, **caractérisé en ce que** les tubes de dosage (11a, 11b, 11c ; 11d, 11e, 11f) présentent des longueurs différentes, lesdits tubes de dosage étant traversés respectivement par un courant partiel (V 2, V 3, V 4), se terminant à l'emplacement de l'amenée dosée et présentant à cet endroit des ouvertures.

20. Réacteur à faisceau tubulaire selon la revendication 19, **caractérisé en ce que** les tubes de dosage (11a, 11b, 11c) sont emboîtés de façon concentrique les uns dans les autres.

21. Réacteur à faisceau tubulaire selon la revendication 19, **caractérisé en ce que** les tubes de dosage (11d, 11e, 11f) s'étendent parallèlement les uns aux autres.

22. Réacteur à faisceau tubulaire selon l'une des revendications 6 à 21, **caractérisé en ce qu'**un filtre à particules (15) est agencé à l'entrée de gaz des moyens d'amenée dosée (11, 11a-11f).

23. Réacteur à faisceau tubulaire selon l'une des revendications 6 à 22, **caractérisé en ce que**, en plus des moyens d'amenée dosée (11, 11a-11f), au moins un dispositif (18) pour augmenter les pertes de pression est agencé dans les tubes de réaction (3).
